(19) **Europäisches Patentamt**

**European Patent Office**

**Office européen des brevets**

(11) Publication number : **0 330 259 B1**

(12) # EUROPEAN PATENT SPECIFICATION

(45) Date of publication of patent specification :
**02.09.92 Bulletin 92/36**

(51) Int. Cl.⁵ : **A01B 33/08, F16D 7/04**

(21) Application number : **89200349.2**

(22) Date of filing : **14.02.89**

(54) **A soil cultivating machine.**

(30) Priority : **18.02.88 NL 8800410**

(43) Date of publication of application :
**30.08.89 Bulletin 89/35**

(45) Publication of the grant of the patent :
**02.09.92 Bulletin 92/36**

(84) Designated Contracting States :
**DE FR GB NL**

(56) References cited :
**EP-A- 0 171 966**
**FR-A- 1 246 741**
**US-A- 2 135 929**
**US-A- 4 153 115**

(73) Proprietor : **C. van der Lely N.V.**
**Weverskade 10 P.O. Box 26**
**NL-3155 ZG Maasland (NL)**

(72) Inventor : **van der Lely, Cornelis**
**7, Brüschenrain**
**Zug (CH)**

(74) Representative : **Mulder, Herman et al**
**Octrooibureau Van der Lely N.V. Weverskade**
**10 P.O. Box 26**
**NL-3155 ZG Maasland (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention concerns a soil cultivating machine comprising a frame portion and a plurality of power-driven soil working members including upwardly directed shafts which are bearing-supported within the said frame portion, the shafts being provided with an overload coupling.

Such a soil cultivating machine is disclosed in US-A-4 153 115.

When working fields containing lots of stones and similar hard objects with machines of the above-defined type, it has been found that the soil working members and the drive therefor are liable to serious damage when stones or the like get jammed between two soil working members or between a soil working member and the frame portion. In this connection, the US-A-4 153 115 contains soil working members which have an overload release between the driving system and the tines, so that, when an immovable object is encountered by a tine, the drive to the respective soil working member is temporarily disconnected.

The present invention proposes a provision which removes the jammed objects as quickly as possible and so reinstate it to its original state.

According to the invention, this is achieved in that the shaft of a soil working member is provided with an eccentric, and that the overload coupling is mounted by a bearing on the outer circumference of the eccentric, the arrangement being such that, when the overload coupling becomes operative, a carrier constituting part of the soil working member performs a reciprocating movement.

By means of this provision it is possible to facilitate the release of a stone, once it has got jammed, by the movement of the soil working member. By subjecting the locking members of the overload couplings of two adjacent soil working members to spring actions of varying strengths, it may be achieved that the overload coupling having a spring of a lesser strength is activated at an earlier stage, which may be advantageous.

Due to the fact that the whole assembly is adequately supported and that the ball bearings are sealed and provided with a lubricant, a proper functioning thereof is ensured continuously under difficult conditions without excessive wear. Preferred features of the invention are set out in the dependent claims.

For a better understanding of the invention and to show how the same may be carried into effect, reference will now be made, by way of example, to some embodiments shown in the accompanying drawings, wherein:

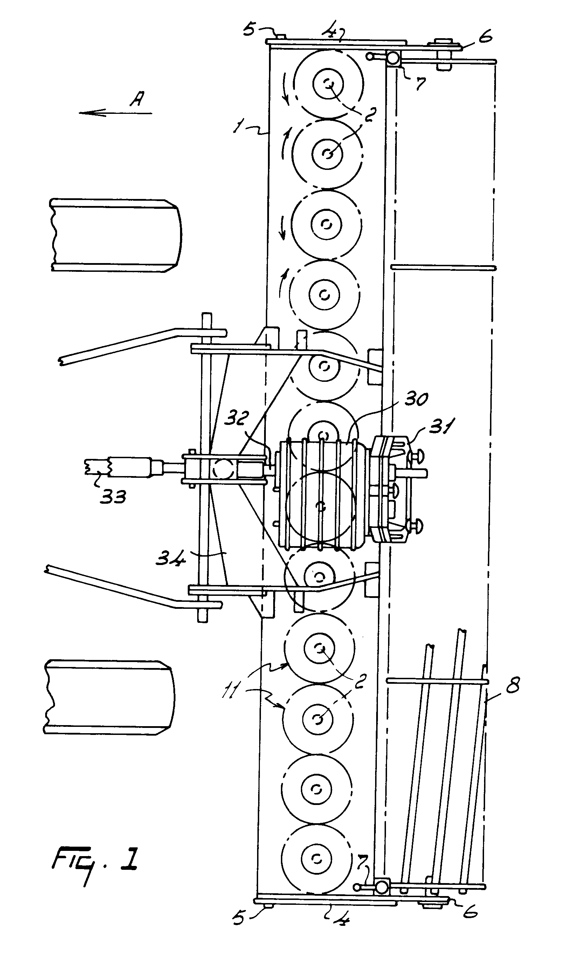

Figure 1 is a plan view of a soil cultivating machine comprising a construction according to the invention;

Figure 2 is a view in accordance with Figure 1 of soil working member provided with an embodiment of an overload coupling according to the invention;

Figure 3 is a view taken on the line III - III in Figure 2, and

Figure 4 is a view taken on the line IV - IV in Figure 3.

The implement shown in the drawings concerns a soil cultivating machine, in particular one for the preparation of a seed bed.

The implement comprises a box-like frame portion 1 which extends transversely to the direction of operative travel A and wherein there are supported at equal interspaces of preferably 25 cms, the upwardly directed, preferably vertical, shafts 2 of soil working members 3. At the upper and lower sides of the frame portion 1, the shafts 2 are bearing-supported by means of bearings 2A and 2B. The ends of the box-like frame portion 1 are closed by means of plates 4 which extend upwardly and at least substantially parallel to the direction of operative travel A. Near their leading sides, each of the plates 4 is provided with a transverse pin 5, the arrangement being such that the longitudinal centre lines of the transverse pins are in alignment. About each of the pins 5 there is arranged freely pivotably an arm 6 which extends rearwardly along the inner side of a plate 4. Each arm 6 can be adjusted in height and be locked in a plurality of positions by means of an adjusting device 7, which in this embodiment is constituted by a threaded spindle arranged near the rear side of the box-like frame portion 1. Between the free ends of the arms 6 there is arranged freely rotatably a roller 8, by means of which the working depth of the soil working members 3 is determined during operation. At the end of a shaft 2 projecting from the bottom side of the frame portion 1, each of the soil working members 3 includes a carrier 9, said carrier having near its ends downwardly extending soil working elements 10 in the form of tines.

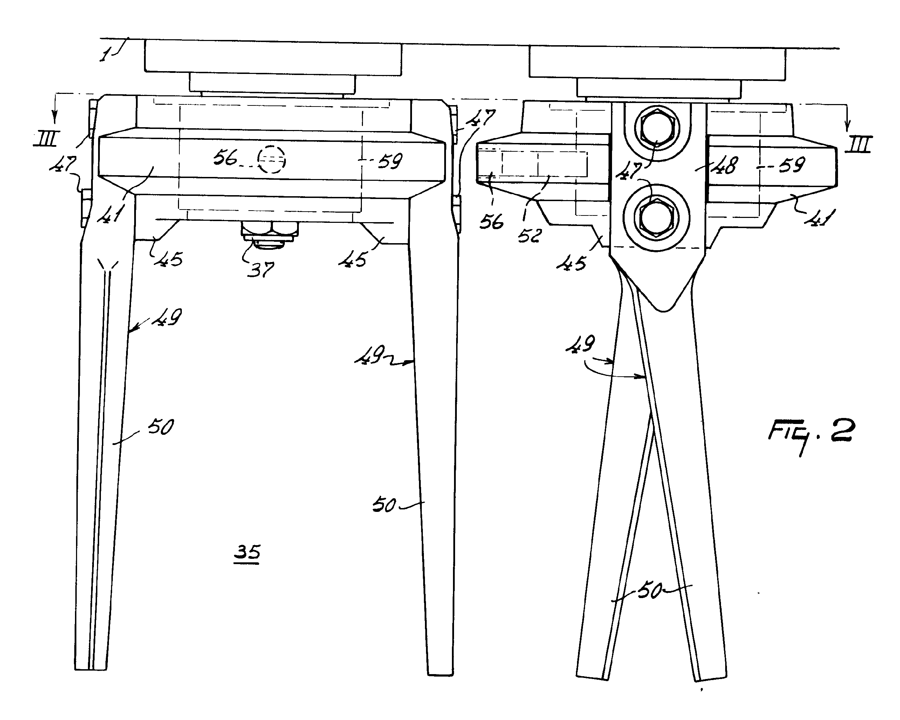

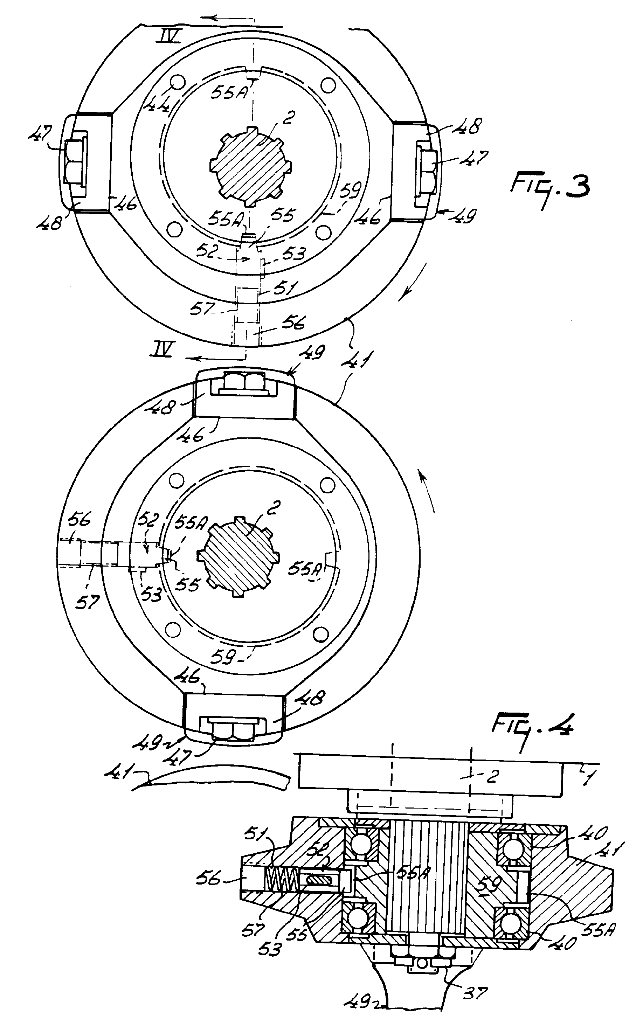

The Figures 2 to 4 show an embodiment of a construction according to the invention.

In this construction there is provided a hub 59, whose circumference extends eccentrically relative to the shaft 2. The eccentric portion of the hubs 59 of adjacent soil working members 35 are arranged at a phase difference of 90° and only one locking member 52 is provided, which locking member is adapted to co-operate with a recess 55A in the eccentric portions.

When in working fields containing lots of stones a stone gets stuck between two adjacent soil working members 35 or between a soil working member and the bottom side of the frame portion 1, the disc-shaped carrier 41 together with the downwardly extending soil working elements 49 is slowed down, which causes the locking member 52 to deflect radially against the action of the helical spring 57 or of the double-cup springs 58, respectively, and the stub 55 to be pushed out of the corresponding recess 55A in the flange 39 of the hub 38, so that the driving connection is interrupted. This prevents damage to be done to the carrier 41 of the soil working member 35 and/or to the bottom side of the frame portion 1 and/or to the drive formed by the gear wheels accommodated in the frame portion.

Now, when the interlock is eliminated and the driving connection is interrupted, the disc-shaped carrier 41 can rotate around the hub 59 which, due to its eccentric structure relative to the axis of rotation a of the soil working member 35, imparts to the disc-haped carrier 41 a movement in an least substantially radial direction, as a result whereof the stone can bereleased more easily. Like in the preceding embodiment, therafter the carrier 41 can rotate further relative to the hub 59 until the locking member 52 can snap again into the recess 55A. Since in this embodiment the diameter of the carriers 41 is somewhat smaller, there is sufficient room for the movement caused by the eccentricity of the hub 59 of a carrier 41. Using the above-described overload couplings, which are stabilized by the bearings 17 of 40, respectively, it is possible, when working fields containing lots of stones or similar hard objects, the prevent in a simple and effective manner that an irreparable damage is done. Moreover, the specific structure of the disc-shaped carriers 41, which taper towards the periphery, can ensure that stones get stuck less rapidly, in particular between a carrier and the bottom side of the frame portion 1. In the above-described embodiments, it is possible to give to the overload couplings a different strength alternatively per soil working member, as a result of which a stone can be released more easily by a soil working member having anoverload coupling of a less high spring Load, which will rotate at an earlier stage. It is alternatively possible to use, instead of ball bearings, e.g. roller bearings or needle bearings for the overload couplings according to the embodiments described. Also, it is possible to provide an overload coupling for every alternate soil working member.

## Claims

1. A soil cultivating machine comprising a frame portion (1) and a plurality of power-driven soil working members (3) including upwardly directed shafts (2) which are bearing-supported within the said frame portion (1), the shafts (2) being provided with an overload coupling, characterized in that the shaft (2) of a soil working member (3, 35) is provided with an eccentric (59), and that the overload coupling is mounted by a bearing (40) on the outer circumference of the eccentric (59), the arrangement being such that, when the overload coupling becomes operative, a carrier (41) constituting part of the soil working member (35) performs a reciprocating movement.

2. A soil cultivating machine as claimed in claim 1, characterized in that the overload coupling includes at least one locking member (52) arranged between two bearings (40).

3. A soil cultivating machine as claimed in claim 2, characterized in that overload couplings are provided for two adjacent soil working members (3, 35), the locking member (52) of the overload coupling for the one soil working member being subjected to a higher spring load than that at the overload coupling for the other soil working member.

4. A soil cultivating machine as claimed in any one of claims 2 to 3, characterized in that the overload coupling constitutes part of the carrier (41) of a soil working member (35), which carrier is supported rotatably on the excentric (59) by means of bearings (40), and that the locking member (52) is arranged between the carrier (41) and the excentric (59).

5. A soil cultivating machine as claimed in claim 4, characterized in that the locking member (52) includes at least one radially movable locking part (52) which is supported in the carrier (41) and is adapted to co-operate with a recess (55A) in the excentric (59), two radially recesses (55A) being arranged diametrically opposite each other.

6. A soil cultivating machine as claimed in claim 5, characterized in that a locking member (52) is subjected to the pressure of double-cup springs.

## Patentansprüche

1. Bodenbearbeitungsmaschine mit einem Gestellteil (1) und mehreren zwangsläufig angetriebenen Bodenbearbeitungsgliedern (3), die aufwärts gerichtete Wellen (2) aufweisen, welche in dem Gestellteil (1) gelagert und abgestützt und mit einer Überlastkupplung versehen sind,

dadurch gekennzeichnet, daß die Welle (2) eines Bodenbearbeitungsgliedes (3, 35) mit einem Exzenter (59) versehen ist, und daß die Überlastkupplung mittels eines Lagers (40) am Außenumfang des Exzenters (59) angebracht ist, wobei die Anordnung derart ausgeführt ist, daß beim Ansprechen der Überlastkupplung ein Träger (41), der Bestandteil des Bodenbearbeitungsgliedes (35) ist, eine oszillierende Bewegung ausführt.

**2.** Bodenbearbeitungsmaschine nach Anspruch 1, dadurch gekennzeichnet, daß die Überlastkupplung mindestens ein Verriegelungsglied (52) aufweist, das zwischen zwei Lagern (40) angeordnet ist.

**3.** Bodenbearbeitungsmaschine nach Anspruch 2, dadurch gekennzeichnet, daß Überlastkupplungen für zwei benachbarte Bodenbearbeitungsglieder (3, 35) vorgesehen sind, und daß das Verriegelungsglied der Überlastkupplung für das eine Bodenbearbeitungsglied unter höherer Federbelastung steht als dasjenige der Überlastkupplung für das andere Bodenbearbeitungsglied.

**4.** Bodenbearbeitungsmaschine nach einem der Ansprüche 2 oder 3, dadurch gekennzeichnet, daß die Überlastkupplung Bestandteil des Trägers (41) eines Bodenbearbeitungsgliedes (35) ist, daß der Träger auf dem Exzenter (59) mittels Lagern (40) drehbar abgestützt ist, und daß das Verriegelungsglied (52) zwischen dem Träger (41) und dem Exzenter (59) angeordnet ist.

**5.** Bodenbearbeitungsmaschine nach Anspruch 4, dadurch gekennzeichnet, daß das Verriegelungsglied (52) mindestens ein radial bewegbares Verriegelungsteil (52) aufweist, das in dem Träger (41) abgestützt ist und mit einer Ausnehmung (55A) in dem Exzenter (59) zusammenwirkt, wobei zwei einander diametral gegenüberliegende Ausnehmungen (55A) vorhanden sind.

**6.** Bodenbearbeitungsmaschine nach Anspruch 5, dadurch gekennzeichnet, daß das Verriegelungsglied (52) mit dem Druck von Doppelgehäuse-Federn beaufschlagt ist.

## Revendications

**1.** Machine pour cultiver le sol comprenant une partie de châssis (1) et une pluralité d'organes de travail du sol (3) motorisés, comprenant des arbres (2) dirigés vers le haut, qui sont soutenus par des paliers à l'intérieur de ladite partie de châssis (1), les arbres étant munis d'un accouplement anti-surcharge,
**caractérisée** en ce que l'arbre (2) d'un organe de travail du sol (3, 35) est muni d'un excentrique (59) et en ce que l'accouplement anti-surcharge est monté au moyen d'un palier (40) sur la circonférence extérieure de l'excentrique (59), l'agencement étant tel que, quand l'accouplement anti-surcharge entre en action, un support (41) faisant partie de l'organe de travail du sol (3) exécute un mouvement alternatif.

**2.** Machine pour cultiver le sol selon la revendication 1, caractérisée en ce que l'accouplement anti-surcharge comporte au moins un organe de verrouillage (52) disposé entre deux paliers (40).

**3.** Machine pour cultiver le sol selon la revendication 2, caractérisée en ce que des accouplements anti-surcharge sont prévus pour deux organes de travail du sol (3, 35) adjacents, l'organe de verrouillage (52) de l'accouplement anti-surcharge pour celui des organes de travail du sol étant soumis à une force de ressort plus grande que celle sur l'accouplement anti-surcharge pour l'autre organe de travail du sol.

**4.** Machine pour cultiver le sol selon l'une quelconque des revendications 2 et 3, caractérisée en ce que l'accouplement anti-surcharge fait partie du support (41) d'un organe de travail du sol (35), lequel support est monté rotatif sur l'excentrique (59) au moyen de paliers (40), et en ce que l'organe de verrouillage (52) est disposé entre le support (41) et l'excentrique (59).

**5.** Machine pour cultiver le sol selon la revendication 4, caractérisée en ce que l'organe de verrouillage (52) comporte au moins une pièce de verrouillage (52) mobile radialement, qui est supportée dans le support (41) et est adaptée pour coopérer avec un renfoncement (55A) ménagé dans l'excentrique (59), deux renfoncements radiaux (55A) étant disposés diamétralement opposés l'un à l'autre.

**6.** Machine pour cultiver le sol selon la revendication 5, caractérisée en ce qu'un organe de verrouillage (52) est soumis à la pression de ressorts à double coupelle élastique.

FIG. 1

FIG. 2

FIG.3

FIG.4